Europäisches Patentamt

**European Patent Office**

Office européen des brevets

(19)

(11) Veröffentlichungsnummer: **0 043 797**
**B2**

(12) **NEUE EUROPÄISCHE PATENTSCHRIFT**

(45) Veröffentlichungstag der neuen Patentschrift:
**30.01.91**

(51) Int. Cl.⁵: **C 08 L 67/02, F 21 V 7/22**

(21) Anmeldenummer: **81810256.8**

(22) Anmeldetag: **22.06.81**

(54) Lichtreflektierender Körper.

(30) Priorität: **26.06.80 CH 4913/80**

(43) Veröffentlichungstag der Anmeldung:
**13.01.82 Patentblatt 82/02**

(45) Bekanntmachung des Hinweises auf die
Patenterteilung:
**19.12.84 Patenblatt 84/51**

(45) Bekanntmachung des Hinweises auf die
Entscheidung u"ber den Einspruch:
**30.01.91 Patentblatt 91/05**

(84) Benannte Vertragsstaaten:
**CH DE FR GB LI**

(56) Entgegenhaltungen:
DE-A-2 206 804      DE-A-2 535 021
DE-A-2 438 102      DE-A-2 719 429
DE-A-2 524 121      DE-A-2 910 643
DE-A-2 532 066

Die Akte enthält technische Angaben, die nach
dem Eingang der Anmeldung eingereicht
wurden und die nicht in dieser Patentschrift
enthalten sind.

(73) Patentinhaber: **CIBA-GEIGY AG**
**Klybeckstrasse 141**
**CH-4002 Basel (CH)**

(72) Erfinder: **Breitenfellner, Franz, Dr.**
**Im Entich 9a**
**D-6140 Bensheim 1 (DE)**

(74) Vertreter: **Zumstein, Fritz, Dr. et al**
**Dr. F. Zumstein sen Dr. E. Assman Dipl.-Ing. F.**
**Klingseisen Dr. F. Zumstein jun.**
**Bräuhausstrasse 4**
**D-8000 München 2 (DE)**

(56) Entgegenhaltungen:
CHEMICAL ABSTRACTS, Band 85, Heft 8, 23.
August 1976, Seite 44, Zusammenfassung
47662n, COLUMBUS, OHIO (US)

CHEMICAL ABSTRACTS, Band 84, Heft 4, 26.
Januar 1976, Seite 41, Zusammenfassung
18261e, COLUMBUS, OHIO (US), W.T. FREED et
al.: "Property modifications in thermoplastic
polyesters through inorganic fillers"

Encycl. Pol. Sc. Technol., Vol. 6 (1967), Seite 472,

Tab.2, u. Seite 742, Tab.2
Hancock: Kunststoffe, 68 (1978), Seiten 74-78

BASF Kunststoffe (PBTP), 5.Aufl. Okt.1979,
Seiten 73-75

Courier Press, Leamington Spa, England.

**EP 0 043 797 B2**

(56) Entgegenhaltungen:
BATEL: Einführung in die
Kerngrössenmesstechnik, (1964), Seiten 127-
131 und (1971) Seite 144

BATEL: Chemie-Ing. Techn. 29 (1957), Seiten
581-589

POCAN: Thermoplastischer Polyester (Bayer
KL4 (100)) April 1980, Seite 30

Wollastatonite: Short-Fiber
Filler/Reinforcement (1978)
A.V. BLOHM: Grundlagen der
Anstrichwissenschaft (1954) Seite 172, Tab. 51
"C"

**Beschreibung**

Die vorliegende Erfindung betrifft lichtreflektierende Körper, wie Scheinwerfer oder Spiegel, deren Wandung aus einem mit feinteiligen Füllstoffen versehenen Polyester auf der Basis von Poly-1,4-butylenterephthalat besteht, wobei auf mindestens eine Fläche der Wandung eine lichtreflektierende Metallschicht aufgebracht ist.

An lichtreflektierende Körper aus thermoplastischen Kunststoffen, die z.B. als Scheinwerfer Verwendung finden, werden hinsichtlich Deformation- und Schockfestigkeit hohe Anforderungen gestellt, da während der Benutzung durch die parabolische Ausbildung des Scheinwerfers relativ hohe Temperaturen und nach der Benützung grosse Temperaturschwankungen entstehen können. Die in der DE-OS 2 910 643 beschriebenen Scheinwerfer genügen diesen Ansprüchen nicht vollständig. DE—A 2 719 429 beschreibt lichtdichte Polyalkylenterphthalatmassen mit hohem Reflexionsvermögen, die als Füllstoff anorganische Weisspigmente enthalten und zur Herstellung von Reflektoren verwendet werden können. Es wurde nun gefunden, dass Scheinwerfer, deren Wandung aus einem Polyester auf der Basis von Poly-1,4-butylenterephthalat und einem feinteiligen Füllstoff besteht, die gestellten Anforderungen erfüllen.

Gegenstand vorliegender Erfindung ist ein lichtreflektierender Körper, dessen Wandung aus einem mit 10—30 Gew.-% feinteiligen Füllstoffen versehenen Poly-1,4-butylenterephthalat oder einem Copolyester auf der Basis von Poly-1,4-butylenterephthalat besteht, wobei auf mindestens einer Fläche der Wandung direkt eine reflektierende Metallschicht aufgebracht ist, und der dadurch gekennzeichnet, ist, dass der Füllstoff eine Partikelgrösse von nicht mehr als 30 µm aufweist und aus der Gruppe Kaolin, Talkum, Glimmer, Wollastonit, Glaskugeln, Zinksulfid, Lithopone, Calciumsulfat und Bariumsulfat ausgewählt ist. Eine untere Grenze der Partikelgrösse ist etwa 0,5 µm.

Poly-1,4-butylenterephthalat ist ein handelsüblicher Polyester. Unter Copolyester auf der Basis von Poly-1,4-butylenterephthalat werden jene verstanden, in denen bis zu 25 Mol.-%, vorzugsweise bis zu 15 Mol.-% der Terephthalsäurereste bzw. Butylenglykolreste durch andere Dicarbonsäurereste oder Diolreste ersetzt sind, bezogen auf den Polyester.

Beispiele für Dicarbonsäuren als Cokomponente sind lineare oder verzweite aliphatische Dicarbonsäuren wie Bernsteinsäure, Glutarsäure, Adipinsäure, Trimethyladipinsäure, Dodecylbernsteinsäure; Azelainsäure oder Dimersäuren (Dimerisationsprodukte von ungesättigten $C_{10}$—$C_{20}$-Fettsäuren), cycloaliphatische Dicarbonsäuren wie Cyclohexan-1,4-dicarbonsäure oder aromatische Dicarbonsäuren wie Isophthalsäure und Diphenyl-4,4'-dicarbonsäure. Beispiele für Diole als Cokomponente sind lineare oder verzweigte aliphatische Diole wie Äthylenglykol, 1,2- oder 1,3-Propylenglykol, Pentylenglykol, Neopentylglykol, cycloaliphatische Diole wie 1,3- oder 1,4-Cyclohexandiol und 1,4-(Dihydroxymethyl)-cyclohexan, aromatische Diole wie Bisphenole, besonders 2,2-Bis-(p-hydroxyphenyl)propan, 2,2-Bis(3,5-dibrom-4-hydroxyphenyl)propan und entsprechend β-hydroxyäthylierte Derivate und N,N-heterocyclische Ringe enthaltende Diole wie zum Beispiel N,N'-(2-hydroxyäthyl)-5,5-dimethylhydantoin, N,N'-(2-hydroxyäthyl)-benzimidazolon und N,N'-(2-hdyroxyäthyl)-4,5,6,7-tetrabrombenzimidazolon.

Vorzugsweise werden 20—30 Gew.-% Kaolin als Füllstoff eingesetzt. Eine hohe Oberflächenqualität besonders bezüglich der Glattheit ist sehr gewünscht, um nach dem direkten Aufbringen einer lichtreflektierenden Metallschicht eine fehlerfreie Spiegelfläche zu erhalten.

Die Partikelgrösse der ausgewählten Füllstoffe ist bevorzugt unter 20 µm, besonders unter 15 µm. Besonders gute Ergebnisse hinsichtlich ausgewogener mechanischer Eigenschaften und Oberflächeneigenschaften werden erzielt, wenn die mittlere Partikelgrösse zwischen 5 und 15 µm liegft.

Bevorzugte Füllstoffe sind Glaskugeln, Talkum und Glimmer, sowie besonders Kaolin. Die Füllstoffe können mit oder ohne Haftvermittler verwendet werden.

Die erfindungsgemässen lichtreflektierenden Körper können als konvexe (z.B. parabolische), konkave oder plane Spiegel ausgebildet sein. Ein besonders bevorzugter Anwendungsbereich sind Schweinwerfer für Kraftfahrzeuge, die bezüglich Lichtreflexion, Leuchtkraft und Lebensdauer mit den üblichen Metallscheinwerfern vergleichbar sind. Die Wandstärke der Körper kann 0,5 bis 5 mm betragen.

Die Herstellung der erfindungsgemässen Körper kann nach in der Technik üblichen Spritzgiessverfahren aus entsprechend gefüllten Formmassen, die noch weitere übliche Zusätze wie Gleitmittel oder Stabilisatoren enthalten können, erfolgen. Die Formtemperaturen können hierbei auf etwa 20 bis 120°C eingestellt werden, die Zylindertemperaturen auf 240—270°C.

Nach dem Formen der Wandung wird die zu verspiegelnde Seite des Körpers mit einer Metallschicht versehen, was nach üblichen Methoden durch zum Beispiel Aufdampfen von Aluminium geschehen kann.

Die nachfolgenden Beispiele erläutern die Erfindung näher.

**Beispiel 1**

Eine Formmasse aus 70 Gew.-% Poly-1,4-butylenterephthalat (PBT), das eine Intrinsic Viskosität von 0,9 dl/g aufweist und 30 Gew.-% Glaskugeln mit einer mittleren Partikelgrösse von 9 µm enthalt wird bei einer Zylindertemperatur von 250°C, einer Werkzeugtemperatur von 90°C und einer Zykluszeit von 45 sec. zu einem parabolisch geformten Körper mit einer Wanddicke von 2,5 mm, einer Tiefe von 65 mm und einem Öffnungsdurchmesser von 170 mm verspritzt. Mittels Aufdampfen von Aluminium im Vakuum wird der Körper mit einer Spiegelschicht versehen. Der erhaltene Reflektor hat eine glatte Oberfläche mit gleichmässigem Reflexionsvermögen.

### Beispiel 2

Gemäss Beispiel 1 wird aus einem PBT (Intrinsic Viskosität (0,95 dl/g) das 30 Gew.-% Glaskugeln mit einer Partikelgrösse von 3—30 μm enthält, ein Reflektor hergestellt. Die Werkzeugtemperatur beträgt 80°C. Die Oberflächeneigenschaften des Reflektors sind vergleichbar mit jenen des Reflektors gemäss Beispiel 1.

### Beispiel 3

Gemäss Beispiel 1 werden aus Formassen aus
a) 85 Gew.-% PBT (Intrinsic Viskosität 0,9 dl/g)
    15 Gew.-% Kaolin (mittlere Korngrösse 2 μm)
b) 70 Gew.-% PBT
    30 Gew.-% Kaolin

Reflektoren hergestellt. Die Reflektoren sind in ihren Oberflächeneigenschaften vergleichbar mit dem Reflektor gemäss Beispiel 1.

## Patentansprüche

1. Lichtreflektierender Körper, dessen Wandung aus einem mit 10—30 Gew.-% feinteiligen Füllstoffen versehenen Poly-1,4-butylenterephthalat oder einem Copolyester auf der Basis von Poly-1,4-butylenterephthalat besteht und wobei auf mindestens einer Fläche der Wandung direkt eine reflektierende Metallschicht aufgebracht ist, dadurch gekennzeichnet, dass der Füllstoff eine Partikelgrösse von nicht mehr als 30 μm aufweist und aus der Gruppe Kaolin, Talkum, Glimmer, Wollastonit, Glaskugeln, Zinksulfid, Lithopone, Calciumsulfat und Bariumsulfat ausgewählt ist.

2. Körper gemäss Anspruch 1, dadurch gekennzeichnet, dass die Partikelgrösse des Füllstoffes unter 20 μm, vorzugsweise unter 15 μm ist.

3. Körper gemäss Anspruch 1, dadurch gekennzeichnet, dass die mittlere Partikelgrösse zwischen 5 und 15 μm ist.

4. Körper gemäss Anspruch 1, dadurch gekennzeichnet, dass er Glaskugeln, Talkum oder Glimmer als Füllstoff enthält.

5. Körper gemäss Anspruch 1, dadurch gekennzeichnet, dass er Kaolin Füllstoff enthält.

6. Körper gemäss Anspruch 5, dadurch gekennzeichnet, dass 20—30 Gew.-% Kaolin enthalten sind.

## Revendications

1. Corps réfléchissant la lumière, dont la paroi consiste en un poly(téréphtalate de butylène-1,4) ou en un copolyester à base de poly(téréphtalate de butylène-1,4), comportant 10 à 30% en poids de charge en fines particules, et sur au moins une surface de paroi duquel une couche métallique réfléchissante est appliquée, corps caractérisé en ce que la charge présente une grosseur de particules non supéreiure à 30 μm et est choisie parmi l'ensemble formé par du kaolin, du talc, du mica, de la wollastonite, des billes de verre, du sulfure de zinc, du lithopone, du sulfate de calcium et du sulfate de baryum.

2. Corps selon la revendication 1, caractérisé en ce que la grosseur des particules de la charge est inférieure à 20 μm et de préférence inférieure à 15 μm.

3. Corps selon la revendication 1, caractérisé en ce que la grosseur moyenne des particules se situe entre 5 et 15 μm.

4. Corps selon la revendication 1, caractérisé en ce qu'il contient des billes de verre, du talc ou du mica comme charge.

5. Corps selon la revendication 1, caractérisé en ce qu'il contient du kaolin comme charge.

6. Corps selon la revendication 5, caractérisé en ce qu'il contient 20 à 30% en poids de kaolin.

## Claims

1. A light-reflecting body whose wall consists of a poly-(1,4-butylene terephthalate) or of a copolyester based on 1,4-butylene terephthalate, in each case containing 10—30% by weight of finely divided fillers, a reflecting metal layer being applied to at least one surface of the wall, in which body the filler has a particle size of not more than 30 μm and is selected from the group comprising kaolin, talc, mica, wollastonite, glass beads, zinc sulfide, lithopone, calcium sulfate and barium sulfate.

2. A body according to claim 1, wherein the particle size of the filler is less than 20 μm, preferably less than 15 μm.

3. A body according to claim 1, wherein the particle size is between 5 and 15 μm.

4. A body according to claim 1, wherein the filler is selected from the group comprising glass beads, talc and mica.

5. A body according to claim 1, wherein the filler is kaolin.

6. A body according to claim 5, which contains 20—30% by weight of kaolin.